# EUROPEAN PATENT APPLICATION

(11) **EP 4 823 078 A1**
(43) Date of publication of application: **14.10.2026**
(21) Application number: 26169322.0
(22) Date of filing: 30.03.2026
(51) Int. Cl.: H04M 1/02

(54) **TERMINAL DEVICE**

(30) Priority: 11.04.2025 CN 202510454648
(71) Applicant: Beijing Zitiao Network Technology Co., Ltd., Beijing 100190 (CN)
(72) Inventor: HAN, Wu, Beijing, 100028 (CN); GONG, Tianyong, Beijing, 100028 (CN); XIE, Chun, Beijing, 100028 (CN)
(74) Representative: Isarpatent

(57) **Abstract**

Embodiments of the present disclosure provide a terminal device, comprising: a rear housing (1), a cover plate, wherein the cover plate (2) is disposed on the rear housing (1); and a support member (3), wherein the support member (3) has a support position, and the support member (3) is configured to, when in the support position, at least partially protrude from the cover plate (2) to support the terminal device, so that the cover plate (2) does not contact a support surface when the terminal device is placed on the support surface. In the terminal device, the outer side surface of the cover plate can be prevented from being obstructed, so that the outer side surface of the cover plate may be exposed for display, thereby eliminating the limitation in the design of the cover plate, realizing the differentiated design of the product, and improving the user experience.

## Description

### CROSS-REFERENCE TO RELATED APPLICATION

This application claims priority to Chinese Patent Application No. 202510454648.4, filed on April 11, 2025, the entire disclosure of which is incorporated herein by reference as part of the present disclosure.

### TECHNICAL FIELD

The present application relates to the field of electronic product technologies, and in particular, to a terminal device.

### BACKGROUND

At present, in order to prevent a cover plate (e.g. a lens) of a rear camera of a mobile phone from being scratched, a design in which a metal bracket surrounds the entire cover plate and is higher than the cover plate is usually adopted, so as to avoid the problem of scratches caused by the cover plate contacting a desktop when the mobile phone is placed on the desktop. However, in such a design, the metal bracket is prone to obstructing the outer side surface of the cover plate, which affects the appearance of the product and user experience.

### SUMMARY

Embodiments of the present disclosure provide a terminal device, comprising: a rear housing, a cover plate, wherein the cover plate is disposed on the rear housing; and a support member, wherein the support member has a support position, and the support member is configured to, when in the support position, at least partially protrude from the cover plate to support the terminal device, so that the cover plate does not contact a support surface when the terminal device is placed on the support surface.

In at least an embodiment, the support member is configured to support the terminal device in corporation with the rear housing when in the support position.

In at least an embodiment, at least a portion of the support member is movable relative to the cover plate to protrude or retract relative to an outer side of the cover plate, thereby enabling the support member to switch between the support position and a retracted position.

In at least an embodiment, a mounting hole is arranged in the cover plate, and the support member is arranged in the mounting hole; and the terminal device further comprises a driving assembly disposed on an inner side of the cover plate, and the driving assembly is configured to drive at least a portion of the support member to extend out of or retract into the mounting hole.

In at least an embodiment, the terminal further comprises a detection sensor, and the driving assembly is configured to, in response to data detected by the detection sensor satisfying a first preset condition, drive the support member to extend out of the mounting hole by a preset length; and in response to the data detected by the detection sensor satisfying a second preset condition, drive the support member to retract into the mounting hole.

In at least an embodiment, the cover plate at least partially protrudes from the rear housing.

In at least an embodiment, in a length direction of the rear housing, the cover plate is relatively close to one end of the rear housing, and the support member is on the cover plate and at an end of the cover plate relatively close to the other end of the rear housing.

In at least an embodiment, the cover plate comprises a first cover plate and a second cover plate that are separately arranged, and the second cover plate is annular and arranged around the first cover plate; and an outer side surface of the first cover plate is a flat surface, and an outer side surface of the second cover plate is a curved surface.

In at least an embodiment, the terminal device further comprises an annular mounting frame configured to mount the cover plate, and the second cover plate is inserted into the insertion slot and butted with the first cover plate.

In at least an embodiment, the support member is fixed to the annular mounting frame.

In at least an embodiment, the annular mounting frame is connected to the rear housing through a mounting hole in the rear housing, and the cover plate is arranged on the mounting frame and directly faces the mounting hole.

In at least an embodiment, the terminal device further comprises a plurality of support members, a part of the plurality of support members are arranged on the cover plate, and another part of the plurality of support members are arranged on the rear housing.

In at least an embodiment, the cover plate is a camera cover plate and has a light-transmitting area.

In at least an embodiment, the terminal device further comprises a photographing component, which is located on an inner side of the cover plate and directly faces the light-transmitting area of the cover plate.

In at least an embodiment, the camera cover plate is a glass lens.

In at least an embodiment, the terminal device is a mobile phone.

### BRIEF DESCRIPTION OF DRAWINGS

The drawings herein, which are incorporated in and constitute a part of this specification, illustrate embodiments consistent with the present application and, together with the description, serve to explain the principles of the present application.

In order to more clearly explain the technical solutions in the embodiments of the present application or in the prior art, the drawings required in the description of the embodiments or the prior art will be briefly introduced below. Obviously, for those of ordinary skill in the art, they may also obtain other drawings from these drawings without paying creative efforts.
Fig. 1 is a schematic structural diagram of a terminal device according to an embodiment of the present application;
Fig. 2 is a schematic partial cross-sectional view of the terminal device in Fig. 1;
Fig. 3 is a first schematic state diagram of the terminal device contacting a desktop according to an embodiment of the present application; and
Fig. 4 is a second schematic state diagram of the terminal device contacting a desktop according to an embodiment of the present application.

In the figures: 1: rear housing; 2: cover plate; 21: first cover plate; 21a: light-transmitting area; 22: second cover plate; 3: support member; 4: mounting frame; 23: mounting hole; and 31: support portion.

### DETAILED DESCRIPTION OF EMBODIMENTS

In order to understand the above objects, features and advantages of the present application more clearly, the solutions of the present application will be further described below. It should be noted that the embodiments of the present application and the features in the embodiments may be combined with each other without conflict.

Many specific details are set forth in the following description to facilitate a full understanding of the present application, but the present application may also be implemented in other ways different from those described herein. Obviously, the described embodiments are part of the embodiments of the present application, but not all of the embodiments.

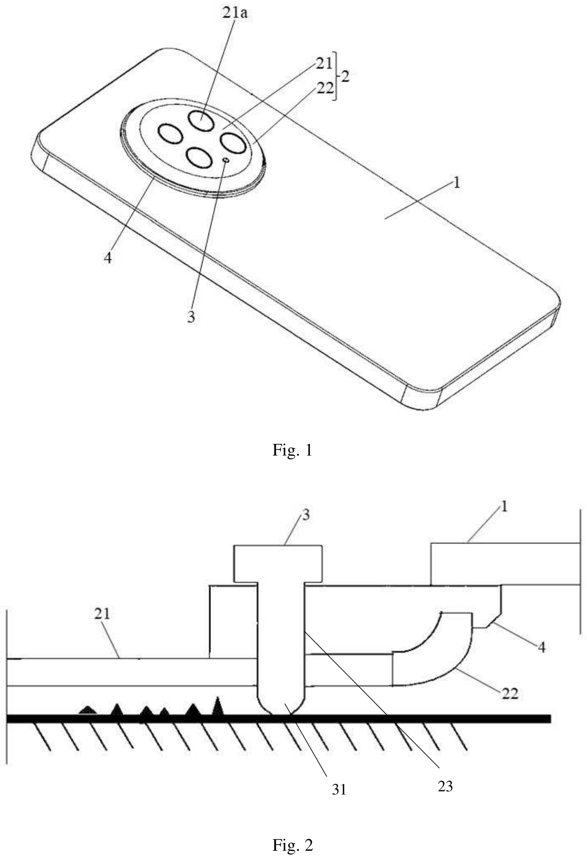

As shown in FIGS. 1 to 4, an embodiment of the present application provides a terminal device, which includes a rear housing 1, a cover plate 2, and a support member 3. The cover plate 2 is disposed on the rear housing 1. The support member 3 has a support position, and the support member 3 is configured to, when in the support portion, at least partially protrude from the cover plate 2 to support the terminal device, so that the cover plate does not contact a support surface when the terminal device is placed on the support surface. For example, referring to Fig, 2, the support member 3 is in the support position and has a support portion 31 protruded from the cover plate 2. For example, the support member 3 may be arranged on the cover plate 2 or on the rear housing 1, which is not limited by the present disclosure. For example, referring to Fig, 2, the support member 3 is arranged on the cover plate 2 and is in the support position. A support portion 31 of the support member 3 is protruded from the cover plate 2 to support the terminal device, and a gap is formed between the cover plate 2 and the support surface.

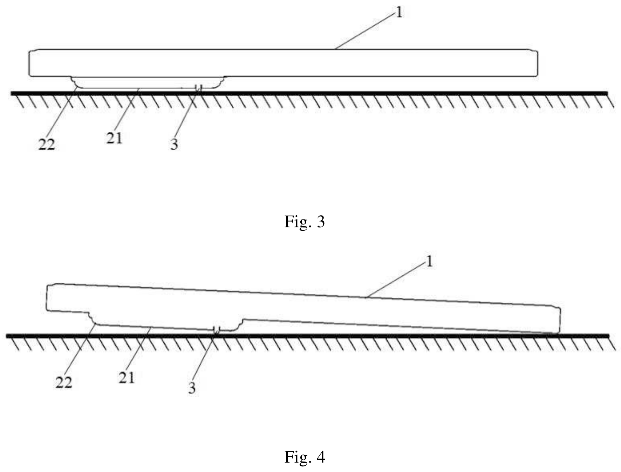

In some embodiments, the terminal device is supported by the support member 3 alone, as shown in Fig. 3. In some other embodiments, the terminal device is supported by the support member 3 in cooperation with the rear housing 1, as shown in Fig. 4.

In the terminal device provided by the embodiment of the present disclosure, it is unnecessary to surround the entire cover plate with a metal bracket, instead, the terminal device is supported by the support member alone or in cooperation with the rear housing, so that the cover plate does not contact the support surface. In this way, the outer side surface of the cover plate can be prevented from being obstructed, so that the outer side surface of the cover plate may be exposed for display, thereby eliminating the limitation in the design of the cover plate, realizing the differentiated design of the product, and improving the user experience.

Further, since a gap is formed between the cover plate 2 and the support surface, the outer side surface of the cover plate may be designed as a curved surface, e.g. a convex curved surface.

At least one support member 3 is provided. That is, the terminal device may be supported by one or more support members 3. For example, a plurality of support members 3 are provided, and the terminal device is supported by the plurality of support members 3, and the rear housing 1 does not participate in supporting the terminal device. The terminal device may also be supported by the at least one support member 3 together with the rear housing 1. In this case, one or more support members 3 are provided.

For example, the terminal device is supported by a plurality of support members 3, a part of the support members 3 may be arranged at the cover plate 2, and the other part of the support members 3 may be arranged at the rear housing 1, so that the terminal device may be supported only by the plurality of support members 3. For example, the support members 3 are arranged at four corners of the rear housing 1, and then the support members 3 arranged at the four corners of the rear housing 1 cooperate with the support member 3 arranged at the cover plate 2 to support the terminal device.

It may be understood that, in the terminal device, by providing the support member 3, which has at least partially protrudes from the camera cover plate 2 when in the support position, the terminal device is supported by the support member 3 in the support portion alone or in cooperation with the rear housing 1, instead of surrounding the entire cover plate 2 with a metal bracket, so that the cover plate 2 does not contact the support surface. In this way, the outer side surface of the cover plate 2 may be prevented from being obstructed, so that the outer side surface of the cover plate 2 may be exposed to show the aesthetic property of its design. Moreover, the outer side surface of the cover plate 2 may be designed as a curved surface, thereby eliminating the limitation in the design of the camera cover plate 2, realizing the differentiated design of the product, and improving the user experience.

The support surface may be a flat surface such as the ground or a desktop, or may be a support surface of other shapes suitable for the terminal device to be placed on.

In the design scheme in which the entire cover plate is surrounded by a metal bracket and the metal bracket extends above the cover plate 2, if the outer side surface of the cover plate 2 is designed as a curved surface, the curved surface is generally a curved surface protruding outward, which requires a greater height of the metal bracket, affecting the aesthetics. Moreover, in this case, the cover plate is wrapped by the metal bracket, and the shape effect of the cover plate 2 is difficult to be displayed due to the wrapping of the metal bracket. By providing the support member 3, which is capable of lifting the cover plate 2 in the support position, so that the cover plate 2 does not contact the support surface, the cover plate 2 may be prevented from being scratched by foreign matters on the support surface, and the outer side surface of the cover plate 2 may be prevented from being shielded, so that the outer side surface of the cover plate 2 may be exposed to show the aesthetic property of its design. The length by which the support member 3 exceeds the cover plate 2 when the support member 3 is in the support position may be set according to actual needs, and is not specifically limited herein.

For example, the support member 3 is a metal member, which has a high structural strength, may provide a stable supporting effect, and has a long service life. For example, the support member 3 has a needle-shaped structure, which may reduce the obstructing of the camera cover plate 2 while providing the supporting effect.

It should also be noted that the support member 3 may be arranged to be fixed in position relative to the cover plate 2, that is, the support member 3 is always in the support position. In some other embodiments, at least a portion of the support member is movable relative to the cover plate to protrude or retract relative to the outer side of the cover plate, thereby enabling the support member to switch between the support position and a retracted position.

Exemplarily, referring to Fig. 2, the support member 3 is arranged on the cover plate 2. A mounting hole 23 may be formed in the cover plate 2, and the support member 3 is arranged in the mounting hole 23. For example, the mounting hole 23 is a penetration hole. For example, the mounting hole 23 is a through hole or a blind hole. Alternatively, no hole may be formed in the cover plate 2, and the support member 3 is directly fixed on the outer surface of the cover plate 2.

Exemplarily, referring to Fig. 2, the mounting hole 23 is a penetration hole, and the support member 3 is arranged in the mounting hole 23 and is in the support position.

For example, one end of the support member 3 is in the cover plate 2, and the other end of the support member 3 extends out of the mounting hole 23 and is located outside the cover plate 2. In this case, the support member 3 may be fixed by a structure located on the inner side of the cover plate 2, and the mounting hole 23 may provide a limiting or positioning effect. For example, referring to Fig. 2, the terminal device further includes a mounting frame 4, the mounting frame 4 is connected to the rear housing 1, and the cover plate 2 is arranged on the mounting frame 4. In this case, the support member 3 is fixed on the mounting frame 4.

Exemplarily, in another specific implementation, at least a portion of the support member can protrude out of or retract into the mounting hole 23, thereby enabling the support member to switch between the support position and the retracted position. For example, the support member 3 is movable relative to the cover plate so as to switch between the support position and the retracted position.

For example, the terminal device further includes a driving assembly disposed on the inner side of the cover plate 2, and the driving assembly is configured to drive at least a portion of the support member to extend out of or retract into the mounting hole.

For example, one end of the support member 3 is connected to the driving assembly, and the other end of the support member 3 is capable of extending out of the mounting hole or retracting into the mounting hole under the driving of the driving assembly.

It may be understood that, the support member 3 is movable relative to the cover plate 2. When the support member 3 is required to perform the support function, the driving assembly drives the support member 3 to extend out of the mounting hole 32. In this case, at least a portion of the support member 3 may extend outward by a preset length from a state of being completely arranged in the mounting hole, or may further extend outward by a preset length from a state of extending out of the mounting hole, that is, the length by which the support member 3 extends out of the mounting hole is increased. When the support function of the support member 3 is not required, the driving assembly drives the support member 3 to retract into the mounting hole 32 and the support member 3 in the retraction position. In this case, the support member 3 may be completely retracted into the mounting hole, or may retract to shorten the length by which the support member 3 extends out of the mounting hole, that is, the length by which the support member 3 extends out of the mounting hole is reduced.

In this case, the driving assembly may be selected as a motor.

For example, when the support member 3 is in the support portion, the support member 3 extends out of the mounting hole by a preset length. When the support member is in the retraction position, the support member 3 may be completely retracted into the mounting hole. In this case, the influence on the aesthetics caused by the support member 3 protruding from the cover plate may be avoided. The preset length may be set according to actual needs, and is not specifically limited herein.

Further, the terminal device further includes a detection sensor, and in response to data detected by the detection sensor satisfying a first preset condition, the driving assembly is controlled to drive the support member 3 to extend out of the mounting hole by a preset length. The preset length by which the support member 3 extends out of the mounting hole may be set according to actual needs, for example, set to a fixed value, or set to a plurality of optional values. The terminal device may select one of the values through selfjudgment, or the user may select one of the values by operating the terminal device, and the value may be changed.

Specifically, for example, the detection sensor of the terminal device includes a gyroscope sensor and a ranging sensor. For example, the ranging sensor is a Time-of-Flight (TOF) ranging sensor. The first preset condition may include a posture condition and a distance condition, the posture condition is that the rear housing faces the support surface, and the distance condition is that the distance between the terminal device and the support surface is gradually reduced. That is, the terminal device is in a falling state, such as a dropping state.

The determination on whether the terminal device is in the falling state may be realized through dropping detection. For example, the terminal device may determine, by using the gyroscope sensor, whether the rear housing of the terminal device faces the desktop, and if yes, the posture condition of the terminal device is satisfied. At the same time, the ranging sensor is controlled to detect whether the distance between the terminal device and the support surface is gradually reduced within a set time, and if yes, the distance condition is satisfied. In the case that both the posture condition and the distance condition of the terminal device are satisfied, the terminal device controls the driving assembly to drive the support member 3 to extend out of the mounting hole. If the posture condition and the distance condition of the terminal device cannot be satisfied at the same time, the support member 3 does not act.

In addition, the terminal device may perform the dropping detection by using the gyroscope sensor and the ranging sensor, and if the terminal device is in the dropping state, the driving assembly is controlled to drive the support member 3 to extend out of the mounting hole, so that the support member 3 contacts the desktop or the ground first, and the cover plate 2 is prevented from directly contacting the ground and being damaged.

Further, in response to the data detected by the detection sensor satisfying a second preset condition, the driving assembly is controlled to drive the support member 3 to retract into the mounting hole.

The second preset condition may include a distance condition, and the distance condition is that the distance between the terminal device and the support surface is gradually increased.

In this way, the terminal device may further control, after being picked up by the user from the support surface, the driving assembly to drive the support member 3 to retract into the mounting hole, thereby improving the aesthetics and preventing the support member 3 from scratching the user. Specifically, in a state where the support member 3 extends out of the mounting hole, that is, when the support member 3 is in the support position, the distance between the terminal device and the desktop may be detected by the ranging sensor, and if the distance is gradually increased within a preset time, it may be determined that the terminal device is picked up, and at this time, the driving assembly is controlled to drive the support member 3 to retract into the mounting hole.

It should be noted that the extension and retraction of the support member 3 may also be realized by the user operating the terminal device. For example, when the user needs to place the terminal device on the support surface, the driving assembly may be controlled, by means of a button operation or a touch screen operation, to drive the support member 3 to extend out. After the terminal device is picked up from the support surface, the driving assembly may also be controlled, by means of the button operation or the touch screen operation, to drive the support member 3 to retract into the mounting hole.

In some embodiments, the outer side surface of the cover plate 2 includes a flat surface and/or a curved surface. That is, the outer side surface of the cover plate 2 may be designed as a flat surface, a curved surface, or partially designed as a curved surface and partially designed as a flat surface, thereby eliminating the limitation in the design of the camera cover plate 2 and realizing the differentiated design of the product.

Exemplarily, referring to Fig. 1, the cover plate 2 includes a first cover plate 21 and a second cover plate 22 that are separately arranged, and the second cover plate 22 is annular and arranged around the first cover plate 21. An outer side surface of the first cover plate 21 is a flat surface, and an outer side surface of the second cover plate 22 is a curved surface.

In some embodiments, the cover plate 2 may be selected as a camera cover plate.

Further, the terminal device further includes a photographing component (not shown in the figure), which is located on the inner side of the cover plate 2 and directly faces a light-transmitting area 21a of the cover plate 2. One or more photographing components may be provided. When a plurality of photographing components are provided, the light-transmitting area 21a of the cover plate 2 is arranged in a one-to-one correspondence with the plurality of photographing components.

The camera cover plate may be selected as a glass lens. In this case, a portion of the glass lens other than the light-transmitting area 21a is a non-light-transmitting area, and an inner side surface of the portion of the glass lens other than the light-transmitting area 21a may be coated or pasted with a light-shielding layer to make this portion non-light-transmitting, thereby achieving the effects of light shielding and decoration.

Exemplarily, referring to Fig. 1, four light-transmitting areas 21a are arranged on the cover plate 2, and in this case, four photographing components may be provided.

Exemplarily, in a specific implementation, the cover plate 2 includes a first cover plate 21 and a second cover plate 22 that are separately arranged, and the second cover plate 22 is annular and arranged around the first cover plate 21. An outer side surface of the first cover plate 21 is a flat surface, and an outer side surface of the second cover plate 22 is a curved surface. In this case, the first cover plate 21 has the light-transmitting area 21a.

In this way, through the design of the second cover plate 22 and the first cover plate 21, the cover plate 2 as a whole has a flat surface and a curved surface, which, compared with the case where the outer side surface of the camera cover plate as a whole is a flat surface, improves the aesthetics and the personalized design of the terminal device.

The first cover plate 21 is a flat plate-like structure, so that the outer side surface of the first cover plate 21 is a flat surface. The second cover plate 22 is a non-flat plate-like structure, and both the outer side surface and an inner side surface of the second cover plate 22 are curved surfaces.

Certainly, the cover plate may also be an integral piece, and in this case, the outer side surface of the cover plate is a curved surface or a flat surface, or the outer side surface of the cover plate includes a flat surface and a curved surface, in which one of the curved surface and the flat surface is annular and is designed to surround the other. In addition, the outer side surfaces of the first cover plate and the second cover plate may both be designed as curved surfaces.

In some embodiments, the cover plate 2 at least partially protrudes out of the rear housing 1. For example, an outside surface of the cover plate is a convex curved surface.

It may be understood that, since the cover plate 2 at least partially protrudes from the rear housing 1, when the terminal device is placed on a support surface, if the cover plate 2 faces downward, the cover plate 2 may contact the support surface without the provision of the support member 3, and at this time, the cover plate 2 is prone to scratches. For example, when the cover plate 2 is a camera cover plate, scratches may affect the photographing effect. Therefore, the support member 3 is provided to support the terminal device when the terminal device is placed on the support surface and the cover plate 2 faces downward, so that there is a gap between the cover plate 2 and the support surface, thereby preventing the cover plate 2 from being scratched.

In some embodiments, referring to FIGS. 1 and 2, the terminal device further includes an annular mounting frame 4 which is configured to mount the cover plate 3.

A mounting hole is formed in the rear housing 1, the mounting frame 4 is connected to the rear housing 1, and the cover plate 2 is arranged on the mounting frame 4 and directly faces the mounting hole.

It may be understood that the mounting frame 4 serves to mount the cover plate 2, so that the cover plate 2 may maintain a stable mounting state. For example, the mounting frame 4 may be selected as a metal mounting frame, which has a high structural strength and a good stability.

Further, an insertion slot is arranged on the mounting frame 4, and the cover plate 2 is inserted into the insertion slot, so that the fixing effect on the cover plate 2 may be further improved.

Exemplarily, referring to Fig. 2, an opening of the insertion slot faces away from the rear housing 1, and the cover plate 2 includes a first cover plate 21 and a second cover plate 22 that are separately arranged, the first cover plate 21 is a flat plate structure, the second cover plate 22 is an annular plate-like structure arranged around the first cover plate 21, and the second cover plate 22 is an arc-shaped plate, which may thus be inserted into the insertion slot and butted with the first cover plate 21.

Exemplarily, in a specific implementation, referring to Fig. 2, the support member 3 is arranged on the mounting frame 4. In this way, the mounting frame 4 also serves to fix the support member 3, so that there is no need to additionally provide a structure for fixing the support member 3 on the inner side of the terminal device.

Certainly, in other implementations, the mounting frame may only serve to mount the cover plate, and the support member may be arranged on or fixed to other structural members on the inner side of the terminal device, such as the rear housing, which will not be listed here redundantly.

In some embodiments, referring to FIGS. 3 and 4, in a length direction of the rear housing 1, the cover plate 2 is relatively close to one end of the rear housing 1, and the support member 3 is located on the cover plate 2 ad at an end of the cover plate 2 relatively close to the other end of the rear housing 1.

It may be understood that such arrangement makes it possible for the support member 3 to lift the cover plate 2 to a required height with a short extension length, while when the support member 3 is located at the other end of the cover plate 2 in the length direction of the rear housing 1, the support member 3 need to extend a longer length to lift the cover plate 2, so that the extension length of the support member 3 may be reduced, the aesthetics may be improved, and at the same time, the user may be prevented from being scratched by an excessively long extension of the support member 3.

For the convenience of description, two ends of the rear housing 1 in the length direction are respectively defined as a first end and a second end, and the cover plate 2 is relatively close to the first end of the rear housing 1. Two ends of the cover plate 2 in the length direction of the rear housing 1 are respectively defined as a third end and a fourth end, where the third end of the cover plate 2 is closer to the first end of the rear housing 1 than the fourth end, and the support member 3 is located at the fourth end of the cover plate 2, so that when the terminal device is supported by the support member 3, the cover plate 2 may be lifted in the case of a small extension length of the support member. If the support member 3 is located at the third end of the cover plate 2, a longer extension length is required to lift the cover plate 2 as a whole.

The terminal device described above may be a mobile phone, a tablet computer, etc., and may also be other electronic devices with a photographing function.

Taking the terminal device as a mobile phone for an example, the terminal device may include the rear housing 1, a middle frame and a front cover plate, the rear housing 1, the middle frame and the front cover plate constitute a housing of the terminal device, and in this case, the rear housing 1 is a plate-like structure. Alternatively, the terminal device does not include the middle frame, but includes the front cover plate and the rear housing 1, and in this case, the rear housing 1 has an inner cavity, and the front cover plate and the rear housing 1 constitute the housing of the terminal device. Alternatively, the terminal device does not include the middle frame, but includes a front housing and the rear housing 1, and in this case, the front housing has an inner cavity, the rear housing 1 is a plate-like structure, and the front housing and the rear housing 1 constitute the housing of the terminal device. Still alternatively, the terminal device does not include the middle frame, but includes a front housing and the rear housing 1, and in this case, the front housing and the rear housing 1 both have a U-shaped structure, and the front housing and the rear housing 1 constitute the housing of the terminal device.

Exemplarily, taking the terminal device as a mobile phone for an example, referring to FIGS. 1 to 4, the terminal device includes a rear housing 1, a cover plate 2, and a support member 3. The cover plate 2 is disposed on the rear housing 1, and an outer side surface of the cover plate 2 includes a flat surface and/or a curved surface. The support member 3 at least protrudes from the cover plate 2 when in the support position, and the support member 3 is configured to support the terminal device together with the rear housing 1 in the support position, so that the cover plate 2 does not contact a support surface when the terminal device is placed on the support surface.

The support member 3 is arranged in the cover plate 2 in a penetrating manner and fixed relative to the cover plate 2. In this case, the support member 3 is always in the support position, that is, the position of the support member 3 relative to the cover plate 2 is kept unchanged. In a length direction of the rear housing 1, the cover plate 2 is relatively close to one end of the rear housing 1, and the support member 3 is located at an end of the cover plate 2 relatively close to the other end of the rear housing 1.

For example, the cover plate includes a first cover plate 21 and a second cover plate 22 that are separately arranged, and the second cover plate 22 is annular and arranged around the first cover plate 21. An outer side surface of the first cover plate 21 is a flat surface, and an outer side surface of the second cover plate 22 is a curved surface.

The first cover plate 21 is a flat plate-like structure, so that the outer side surface of the first cover plate 21 is a flat surface. The second cover plate 22 is a non-flat plate-like structure, and in this case, both the outer side surface and an inner side surface of the second cover plate 22 are curved surfaces.

For example, the cover plate 2 is a camera cover plate. The camera cover plate has a light-transmitting area 21a, and the photographing component of the terminal device directly faces the light-transmitting area 21a. In this way, through the design of the second cover plate 22, the camera cover plate as a whole has a flat surface and a curved surface, which, compared with the case where the camera cover plate as a whole is a flat surface, improves the aesthetics and the personalized design of the terminal device.

The camera cover plate may be selected as a glass lens. A portion of the glass lens other than the light-transmitting area 21a is a non-light-transmitting area, and an inner side surface of the portion of the glass lens other than the light-transmitting area 21a may be coated or pasted with a light-shielding layer to make this portion non-light-transmitting, thereby achieving the effects of light shielding and decoration.

A mounting hole is formed in the rear housing 1. The terminal device further includes an annular mounting frame 4, the mounting frame 4 is connected to the rear housing 1, and the camera cover plate is arranged on the mounting frame 4 and directly faces the mounting hole.

An insertion slot is arranged on the mounting frame 4, and the camera cover plate is inserted into the insertion slot. An opening of the insertion slot faces away from the rear housing 1, and the second cover plate 22 is an arc-shaped plate, which may thus be inserted into the insertion slot and butted with the first cover plate 21.

It should be noted that in this paper, relational terms such as "first" and "second" are only used to distinguish one entity or operation from another entity or operation, and do not necessarily require or imply any actual relationship or order between these entities or operations. Moreover, terms "include", "include" or any other variation thereof are intended to cover non-exclusive inclusion, so that a process, method, article or device including a series of elements includes not only those elements, but also other elements not explicitly listed or elements inherent to such process, method, article or device. Without further restrictions, an element defined by phrase "including a" does not exclude that there are other identical elements in the process, method, article or device including the element.

The above description is only specific embodiments of the present application, enabling those skilled in the art to understand or implement the present application. Various modifications to these embodiments will be apparent to those skilled in the art, and general principles defined herein may be implemented in other embodiments without departing from the spirit or scope of the present application. Therefore, the present application will not be limited to the embodiments described herein, but rather to the widest scope consistent with the principles and novel features disclosed herein.

## Claims

1. A terminal device, comprising:
a rear housing (1),
a cover plate, wherein the cover plate (2) is disposed on the rear housing (1); and
a support member (3), wherein the support member (3) has a support position, and the support member (3) is configured to, when in the support position, at least partially protrude from the cover plate (2) to support the terminal device, so that the cover plate (2) does not contact a support surface when the terminal device is placed on the support surface.

2. The terminal device of claim 1, wherein the support member (3) is configured to support the terminal device in corporation with the rear housing (1) when in the support position.

3. The terminal device of claim 1 or 2, wherein at least a portion of the support member (3) is movable relative to the cover plate (2) to protrude or retract relative to an outer side of the cover plate (2), thereby enabling the support member (3) to switch between the support position and a retracted position.

4. The terminal device of claim 3, wherein a first mounting hole (23) is arranged in the cover plate (2), and the support member (3) is arranged in the first mounting hole (23); and
the terminal device further comprises a driving assembly disposed on an inner side of the cover plate (2), and the driving assembly is configured to drive at least a portion of the support member (3) to extend out of or retract into the first mounting hole (23).

5. The terminal device of claim 4, further comprising a detection sensor,
wherein the driving assembly is configured to, in response to data detected by the detection sensor satisfying a first preset condition, drive the support member (3) to extend out of the first mounting hole (23) by a preset length; and in response to the data detected by the detection sensor satisfying a second preset condition, drive the support member (3) to retract into the first mounting hole (23).

6. The terminal device of claim 1, wherein the cover plate (2) at least partially protrudes from the rear housing (1).

7. The terminal device of any one of claims 1-6, wherein in a length direction of the rear housing (1), the cover plate (2) is relatively close to one end of the rear housing (1), and the support member (3) is on the cover plate (2) and at an end of the cover plate (2) relatively close to the other end of the rear housing (1).

8. The terminal device of any one of claims 1-7, wherein the cover plate (2) comprises a first cover plate (21) and a second cover plate (22) that are separately arranged, and the second cover plate (22) is annular and arranged around the first cover plate (21); and
an outer side surface of the first cover plate (21) is a flat surface, and an outer side surface of the second cover plate (22) is a curved surface.

9. The terminal device of claim 8, further comprising an annular mounting frame (4) configured to mount the cover plate (2),
wherein the second cover plate (22) is inserted into the insertion slot and butted with the first cover plate (21).

10. The terminal device of claim 9, wherein the support member (3) is fixed to the annular mounting frame (4).

11. The terminal device of claim 9 or 10, wherein the annular mounting frame (4) is connected to the rear housing (1) through a second mounting hole in the rear housing (1), and the cover plate (2) is arranged on the mounting frame and directly faces the second mounting hole.

12. The terminal device of any one of claims 1-11, comprising a plurality of support members (3), wherein a part of the plurality of support members (3) are arranged on the cover plate (2), and another part of the plurality of support members (3) are arranged on the rear housing (1).

13. The terminal device of any one of claims 1-12, wherein the cover plate (2) is a camera cover plate (2) and has a light-transmitting area (21a);
for example, the camera cover plate (2) is a glass lens.

14. The terminal device of claim 13, wherein the terminal device further comprises a photographing component, which is located on an inner side of the cover plate (2) and directly faces the light-transmitting area (21a) of the cover plate (2).

15. The terminal device of any one of claims 1-14, wherein the terminal device is a mobile phone.
